# EUROPEAN PATENT APPLICATION

(11) **EP 4 516 458 A1**
(43) Date of publication of application: **05.03.2025**
(21) Application number: 24192781.3
(22) Date of filing: 05.08.2024
(51) Int. Cl.: B25F 5/00

(54) **POWER TOOL**

(30) Priority: 30.08.2023 CN 202311111793; 30.08.2023 CN 202311108572
(71) Applicant: Nanjing Chervon Industry Co., Ltd., Nanjing, Jiangsu 211106 (CN)
(72) Inventor: YU, Xiaobo, Nanjing (CN); LI, Shuang, Nanjing (CN); SHEN, Yuanyuan, Nanjing (CN)
(74) Representative: Sun, Yiming

(57) **Abstract**

A power tool (100) includes a functional piece (30); an electric motor (40) for driving the functional piece (30) to operate; a power supply device (50) for supplying power to at least the electric motor (40); a parameter detection device connected to the electric motor and configured to acquire multiple operating parameters of the electric motor and/or the power supply device; and a controller connected to the parameter detection device and configured to control running of the electric motor. The controller is configured to detect whether the multiple operating parameters satisfy policy switching conditions corresponding to the multiple operating parameters; in the case where any operating parameter of the multiple operating parameters satisfies a policy switching condition corresponding to the any operating parameter, control the electric motor by using a first electric motor control policy; and in the case where none of the multiple operating parameters satisfy the policy switching conditions corresponding to the multiple operating parameters, control the electric motor by using a second electric motor control policy.

## Description

### TECHNICAL FIELD

The present application relates to the technical field of power tools and, in particular, to a power tool.

### BACKGROUND

A functional piece of a power tool is driven by an electric motor to perform operations such as cutting, fastening, and grinding, the running of the electric motor is controlled by a controller, and the controller may control the electric motor by using different policies to achieve a speed increase or decrease through a rotational speed change process corresponding to a policy. When a load condition of the electric motor is different, the electric motor has a different rotational speed change trend and the controller requires a different rotational speed of the electric motor, and the controller may control, according to the current load condition of the electric motor, the running of the electric motor by using a different control policy.

This part provides background information related to the present application, and the background information is not necessarily the existing art.

### SUMMARY

An object of the present application is to solve or at least alleviate part or all of the preceding problems. Therefore, an object of the present application is to provide a power tool.

To achieve the preceding object, the present application adopts the technical solutions below.

A power tool includes a functional piece; an electric motor for driving the functional piece to operate; a power supply device for supplying power to at least the electric motor; a parameter detection device connected to the electric motor and/or the power supply device and configured to acquire an operating parameter of the electric motor and/or the power supply device; and a controller connected to the parameter detection device and configured to control running of the electric motor. The power tool further includes a temperature detection device connected to the controller and configured to acquire an ambient temperature at a temperature measurement point. The controller is configured to determine a parameter threshold corresponding to the ambient temperature according to the ambient temperature; and determine a current electric motor control policy based on a numerical relationship between the operating parameter and the parameter threshold and control the electric motor by using the electric motor control policy.

In some examples, the operating parameter includes one or more of an electric motor speed, a bus current, a bus voltage, a phase voltage, a pulse-width modulation (PWM) duty cycle, a demagnetization time, and a freewheeling time of the electric motor.

In some examples, the ambient temperature is any one of an electric motor temperature, a housing temperature, and a metal-oxide-semiconductor (MOS) temperature of the power tool.

In some examples, the controller is configured to, in the case where the operating parameter exceeds the parameter threshold or an operation value of one or more operating parameters exceeds the parameter threshold, control the electric motor by using a first electric motor control policy; and in the case where the operating parameter does not exceed the parameter threshold or the operation value of the one or more operating parameters does not exceed the parameter threshold, control the electric motor by using a second electric motor control policy.

In some examples, the controller is configured to, if an electric motor speed of the electric motor is less than or equal to a first parameter threshold corresponding to a first ambient temperature, control the electric motor by using a first electric motor control policy; and if the electric motor speed is greater than the first parameter threshold, control the electric motor by using a second electric motor control policy.

In some examples, a second parameter threshold corresponding to a second ambient temperature is greater than the first parameter threshold corresponding to the first ambient temperature, and the second ambient temperature is higher than the first ambient temperature.

In some examples, the controller is configured to use the first electric motor control policy to control the electric motor speed of the electric motor to increase and remain a target high speed in a loaded state and use the second electric motor control policy to control the electric motor speed of the electric motor to remain a target low speed in a to-be-loaded state or configure the PWM duty cycle of the electric motor to be a target low duty cycle in a to-be-loaded state.

In some examples, the controller is further configured to, before the electric motor enters the to-be-loaded state, use a third electric motor control policy to control the PWM duty cycle of the electric motor to increase in a no-load state until the PWM duty cycle reaches the target low duty cycle when the PWM duty cycle remains unchanged and the electric motor enters the to-be-loaded state; determine an idle speed of the electric motor when the PWM duty cycle remains unchanged and determine a corresponding parameter threshold based on the idle speed and the ambient temperature; and if the electric motor speed of the electric motor is less than or equal to the parameter threshold, control the electric motor by using the first electric motor control policy.

In some examples, the power tool further includes an operating member for a user to operate to select a current working mode of the power tool, where the working mode includes at least multiple speed regulation modes and one automatic sensing mode; and the controller is further configured to, in the case where the current working mode is the one automatic sensing mode, dynamically adjust the electric motor control policy based on the operating parameter and the ambient temperature.

A control method for a power tool includes the following: a controller of the power tool receives an operating parameter of an electric motor transmitted from a parameter detection device and receives an ambient temperature at a temperature measurement point and transmitted from a temperature detection device; the controller determines a parameter threshold corresponding to the ambient temperature according to the ambient temperature; and the controller determines a current electric motor control policy based on a numerical relationship between the operating parameter and the parameter threshold and controls the electric motor by using the electric motor control policy.

A power tool includes a functional piece; an electric motor for driving the functional piece to operate; a power supply device for supplying power to at least the electric motor; a parameter detection device connected to the electric motor and configured to acquire multiple operating parameters of the electric motor and/or the power supply device; and a controller connected to the parameter detection device and configured to control running of the electric motor. The controller is configured to detect whether the multiple operating parameters satisfy policy switching conditions corresponding to the multiple operating parameters; in the case where any operating parameter of the multiple operating parameters satisfies a policy switching condition corresponding to the any operating parameter, control the electric motor by using a first electric motor control policy; and in the case where none of the multiple operating parameters satisfy the policy switching conditions corresponding to the multiple operating parameters, control the electric motor by using a second electric motor control policy.

In some examples, the multiple operating parameters include at least two of an electric motor speed, a bus current, a bus voltage, a phase voltage, a PWM duty cycle, a demagnetization time, and a freewheeling time of the electric motor.

In some examples, the power tool further includes a temperature detection device connected to the controller and configured to acquire an ambient temperature at a temperature measurement point and transmit the ambient temperature to the controller. The controller is configured to determine policy switching conditions corresponding to the multiple operating parameters at the ambient temperature according to the ambient temperature; and detect whether the multiple operating parameters satisfy the policy switching conditions corresponding to the multiple operating parameters at the ambient temperature, where the same operating parameter corresponds to different policy switching conditions at different ambient temperatures.

In some examples, the ambient temperature is any one of an electric motor temperature, a housing temperature, and a MOS temperature of the power tool.

In some examples, the controller is configured to periodically detect whether each operating parameter of the multiple operating parameters satisfies a policy switching condition corresponding to the each operating parameter based on a detection period corresponding to the each operating parameter.

In some examples, the controller is configured to use the first electric motor control policy to control the electric motor speed of the electric motor to increase and remain a target high speed in a loaded state and use the second electric motor control policy to control the electric motor speed of the electric motor to remain a target low speed in a to-be-loaded state or configure the PWM duty cycle of the electric motor to be a target low duty cycle in a to-be-loaded state.

In some examples, the controller is configured to use the operating parameter or an operation value of the operating parameter exceeding a parameter threshold corresponding to the operating parameter as the policy switching condition or use the operating parameter or an operation value of the operating parameter exceeding a parameter threshold corresponding to the operating parameter at the ambient temperature as the policy switching condition.

In some examples, the controller is further configured to, before the electric motor enters the to-be-loaded state, use a third electric motor control policy to control the electric motor speed of the electric motor to increase in a no-load state until the electric motor speed reaches the target low speed when the electric motor speed remains unchanged and the electric motor enters the to-be-loaded state; and if an integral value of a slope of a function of the bus current of the electric motor over time within a preset period is greater than or equal to a corresponding current integral threshold, control the electric motor by using the first electric motor control policy.

In some examples, the controller is further configured to, before the electric motor enters the to-be-loaded state, use a third electric motor control policy to control the electric motor speed of the electric motor to increase in a no-load state until the electric motor speed reaches the target low speed when the electric motor speed remains unchanged and the electric motor enters the to-be-loaded state; and if an integral value of a slope of a function of the PWM duty cycle of the electric motor over time within a preset period is greater than or equal to a corresponding duty cycle integral threshold, control the electric motor by using the first electric motor control policy.

In some examples, the controller is further configured to, before the electric motor enters the to-be-loaded state, use a third electric motor control policy to control the PWM duty cycle of the electric motor to increase in a no-load state until the PWM duty cycle reaches the target low duty cycle when the PWM duty cycle remains unchanged and the electric motor enters the to-be-loaded state; and if an integral value of a slope of a function of the electric motor speed of the electric motor over time within a preset period is less than or equal to a corresponding rotational speed integral threshold, control the electric motor by using the first electric motor control policy.

A control method for a power tool includes the following: a controller of the power tool receives multiple operating parameters of an electric motor transmitted from a parameter detection device; the controller detects whether the multiple operating parameters satisfy policy switching conditions corresponding to the multiple operating parameters; in the case where any operating parameter of the multiple operating parameters satisfies a policy switching condition corresponding to the any operating parameter, the controller controls the electric motor by using a first electric motor control policy; and in the case where none of the multiple operating parameters satisfy the policy switching conditions corresponding to the multiple operating parameters, the controller controls the electric motor by using a second electric motor control policy.

A power tool includes a functional piece; an electric motor for driving the functional piece to operate; a power supply device for supplying power to at least the electric motor; a parameter detection device connected to the electric motor and configured to acquire an operating parameter of the electric motor and/or the power supply device; and a controller connected to the parameter detection device and configured to control running of the electric motor. The controller is configured to determine a corresponding parameter threshold according to a value of the operating parameter within a preset time period, determine, out of the preset time period, a current electric motor control policy based on a numerical relationship between a current operating parameter and the determined parameter threshold, and control the electric motor by using the electric motor control policy.

In some examples, the preset time period is a time period of a preset duration since the electric motor is started.

In some examples, the parameter threshold is updated after the electric motor is started each time.

In some examples, the controller is configured to perform an operation on values of one or more operating parameters within the preset time period and determine an operation value as a parameter threshold corresponding to the one or more operating parameters.

In some examples, the operating parameter includes one or more of an electric motor speed, a bus current, a bus voltage, a phase voltage, a PWM duty cycle, a demagnetization time, and a freewheeling time of the electric motor.

In some examples, the controller is configured to determine the corresponding parameter threshold to be an average value of a product of the bus voltage and the freewheeling time of the electric motor within the preset duration since the electric motor is started; after the preset duration since the electric motor is started, control the electric motor by using a first electric motor control policy in the case where a current product of the bus voltage and the freewheeling time of the electric motor exceeds the parameter threshold; and control the electric motor by using a second electric motor control policy in the case where the current product of the bus voltage and the freewheeling time of the electric motor does not exceed the parameter threshold.

A control method for a power tool includes the following: a controller of the power tool receives an operating parameter of an electric motor and/or a power supply device transmitted by a parameter detection device within a preset time period and determines a corresponding parameter threshold according to a value of the operating parameter within the preset time period; and the controller receives a current operating parameter of the electric motor and/or the power supply device transmitted by the parameter detection device, determines a current electric motor control policy based on a numerical relationship between the current operating parameter and the determined parameter threshold, and controls the electric motor by using the electric motor control policy.

The present application has the following benefits: when switching the electric motor control policy according to a load condition of the electric motor, the controller of the power tool detects the policy switching condition corresponding to each operating parameter for the multiple operating parameters of the electric motor and/or the power supply device, selects the first policy to control the electric motor in the case where any parameter satisfies the condition, and selects the second policy to control the electric motor in the case where none of the parameters satisfy the conditions. In this solution, the load condition of the electric motor is determined in conjunction with the multiple operating parameters to determine which policy is used for controlling the electric motor so that the controller of the power tool can accurately and efficiently implement electric motor control, thereby ensuring the working performance of the power tool.

### BRIEF DESCRIPTION OF DRAWINGS

FIG. 1 is a plan view of a power tool 100 as an example of the present application.
FIG. 2 is a plan view of a jigsaw 100a as an example of the present application.
FIG. 3 is a schematic diagram of electric control of the power tool 100 shown in FIG. 1.
FIG. 4 is a flowchart of a control scheme for a controller to control the running of the electric motor in the power tool 100 shown in FIG. 3.
FIG. 5 is a flowchart of another control scheme for a controller to control the running of the electric motor in the power tool 100 shown in FIG. 3.
FIG. 6 is a plan view of a lighting assembly 200 in the jigsaw 100a shown in FIG. 2.
FIG. 7 is a perspective view of a lighting operation member 220 in the jigsaw 100a shown in FIG. 2.
FIG. 8 is a perspective view of a shield 90 in the jigsaw 100a shown in FIG. 2.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Technical solutions of the present application are described below in detail in conjunction with drawings and examples.

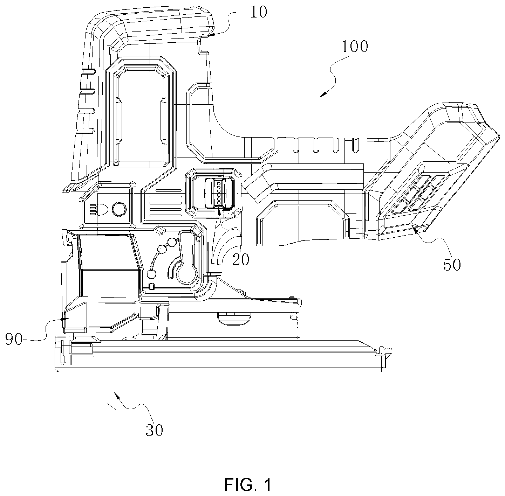

FIG. 1 shows a power tool 100 as an example of the present application. The power tool 100 shown in FIG. 1 is a jigsaw 100a. In other examples, the power tool 100 may be other types of handheld power tools such as a circular saw, a reciprocating saw, an electric drill, and an impact wrench, table tools such as a miter saw and a table saw, or outdoor power apparatus such as a mower and a snow thrower. The jigsaw 100a is mainly exemplified hereinafter. However, it is to be understood that the power tool 100 to which the technical solutions of the present application are applied is not limited to the jigsaw 100a or the preceding types of tools.

Referring to FIGS. 1 to 3, the power tool 100 includes a housing 10, an operating member 20, a functional piece 30, an electric motor 40, and a power supply device 50. The housing 10 constitutes a body of the power tool 100, connects or supports the preceding components, and forms an accommodation space capable of accommodating or partially accommodating the preceding components. The operating member 20 is for a user to operate to start or stop the electric motor 40 to be described later or for a user to operate to regulate a rotational speed of the electric motor 40 or fulfill another function. In some examples, the operating member 20 is electrically connected to a controller 60 to be described later and is operable by the user to switch the power tool 100 between multiple working modes and transmit a corresponding mode signal to the controller 60 so that after receiving the mode signal, the controller 60 determines a current working mode of the power tool 100 and then implements the start/stop or speed regulation of the electric motor 40 or another function. The functional piece 30 is an actual component of the power tool 100 that performs a cutting, fastening, grinding, or impact operation. In this example, the functional piece 30 in the jigsaw 100a is a saw blade 31. The jigsaw 100a further includes a clamping device 32 and a transmission assembly 33, the transmission assembly 33 includes an eccentric structure and a reciprocating rod, the saw blade 31 is connected to the clamping device 32, and the clamping device 32 is connected to the reciprocating rod.

The electric motor 40 is a prime mover in the power tool 100. When a motor shaft of the electric motor 40 rotates, the functional piece 30 can be directly driven or indirectly driven through the transmission assembly. In this example, the electric motor 40 drives the reciprocating rod to reciprocate through the eccentric structure in the transmission assembly 33 of the jigsaw 100a to transmit power for performing the cutting operation to the functional piece, the saw blade 31. In some examples, the electric motor 40 may be a brushless motor. The power supply device 50 can supply power to at least the electric motor 40. The power supply device 50 may also supply electrical energy to components such as the controller 60, a parameter detection device 70, and a temperature detection device 80 to be described later. In some examples, the power supply device 50 may be a battery pack 51 detachably connected to the power tool 100 such as the jigsaw 100a. In some other examples, the power tool 100 such as the jigsaw 100a may be powered by mains electricity or an alternating current power supply in conjunction with a power adapter or related circuits such as a transformer circuit, a rectifier circuit, and a voltage regulator circuit.

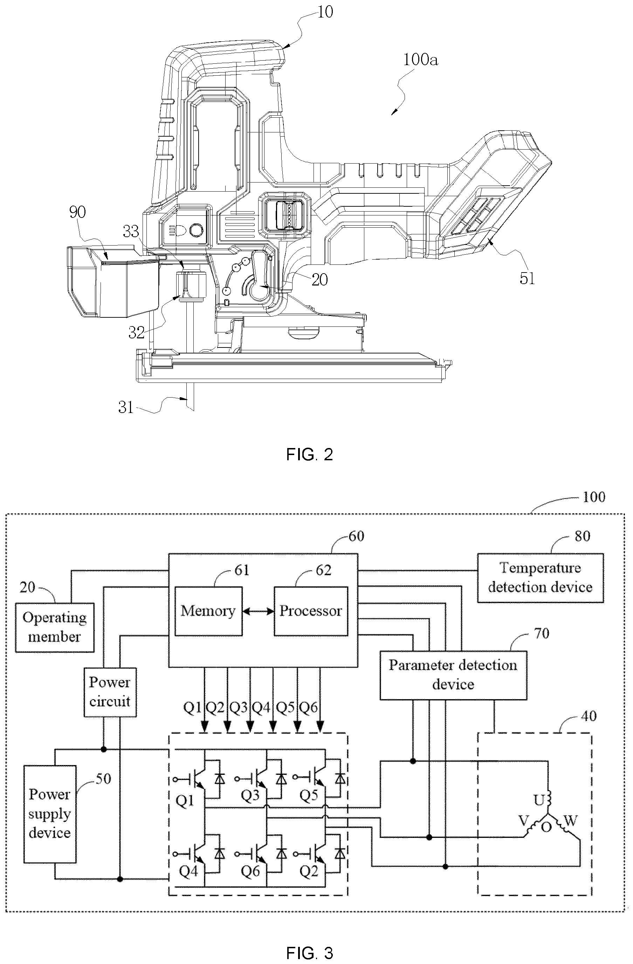

Referring to FIG. 3, in addition to the housing 10, the operating member 20, the functional piece 30, the electric motor 40, and the power supply device 50, the power tool 100 further includes the controller 60, the parameter detection device 70, and the temperature detection device 80. The controller 60 includes at least a memory 61 and a processor 62. The memory 61 may be a read-only memory (ROM), a random-access memory (RAM), an electrically erasable programmable read-only memory (EEPROM), a flash memory, or a combination thereof. The memory 61 stores a control program executable by the processor 62. The processor 62 may be a microcontroller unit (MCU), an Advanced Reduced Instruction Set Computing Machine (ARM), a digital signal processor (DSP), or the like and can read and execute an executable program in the memory 61 to control the running of the electric motor 40. The controller 60 has multiple control manners for the electric motor 40, including, but not limited to, a six-step commutation control manner and a field-oriented control (FOC) manner. The controller 60 may output corresponding control signals to the electric motor 40 in different control manners so that the electric motor 40 runs at a rotational speed intended by the controller 60 and in a direction intended by the controller 60. Generally, to drive the electric motor 40 to run normally, the power tool 100 further includes a drive device such as a three-phase inverter bridge and an integrated drive chip.

The parameter detection device 70 is electrically connected to the electric motor 40, is electrically or communicatively connected to the controller 60, and can detect one or more operating parameters of the electric motor 40 such as an electric motor speed, a PWM duty cycle, a bus voltage, a bus current, a phase voltage, a phase current, a freewheeling time, and a demagnetization time and transmit the detected operating parameters to the controller 60 for reference and application. In some examples, the parameter detection device 70 may also be electrically connected to the power supply device 50 such as the battery pack 51 and can detect operating parameters of the battery pack 51 such as a power supply voltage, a power supply current, and a battery pack temperature and transmit the detected operating parameters of the battery pack to the controller 60 for reference and application. It is to be understood that depending on actual scenario requirements, the parameter detection device 70 may also detect and transmit to the controller 60 other types of operating parameters of the electric motor or the battery pack that are not listed above. In some examples, the parameter detection device 70 may include various types of sensors 71.

The temperature detection device 80 is electrically or communicatively connected to the controller 60 and can transmit an ambient temperature detected at each temperature measurement point to the controller 60. A position of the temperature measurement point and the number of temperature measurement points are not specifically limited. The ambient temperature includes, but is not limited to, an electric motor temperature of the electric motor 40, a housing temperature of the housing 10, and a MOS temperature in the power tool 100. In some examples, the temperature detection device 80 may be a temperature sensor 81.

To ensure the sensitivity, accuracy, and temperature adaptability of electric motor control of the controller 60 in the power tool 100, after receiving the operating parameters of the electric motor 40 transmitted from the parameter detection device 70 and/or after receiving the ambient temperature at the temperature measurement point and transmitted from the temperature detection device 80, the controller 60 may consider, in conjunction with the preceding data, whether to switch an electric motor control policy and which electric motor control policy is switched to. The electric motor control policy corresponds to a current state of the electric motor 40 in the power tool 100 and can be used for the controller 60 to determine an electric motor speed of the electric motor 40 and a change trend of the electric motor speed at present and in a later duration.

The state of the electric motor 40 includes at least a no-load state, a to-be-loaded state, and a loaded state. The no-load state is a state at the beginning of startup of the power tool 100 and before the operation of the power tool 100. When the power tool 100 is in the no-load state, the controller 60 may control the electric motor speed to increase and remain a target low speed. The to-be-loaded state is a state after the power tool 100 has successfully started and before the operation of the power tool 100. The electric motor speed has reached the target low speed or a target low duty cycle. When the power tool 100 is in the to-be-loaded state, the controller 60 controls the electric motor speed to remain the target low speed or at the target low duty cycle. The loaded state is a state when the power tool 100 is in operation. When the power tool 100 is in the loaded state, the controller 60 controls the electric motor speed to increase and remain a target high speed. In other words, in the technical solutions of the present application, the controller 60 accurately determines the state of the electric motor 40 in conjunction with the preceding data and switches to the corresponding electric motor control policy to control the electric motor 40.

In some examples, the controller 60 dynamically adjusts, according to a current ambient temperature, a parameter threshold used in the switching of the electric motor control policy to avoid a control failure and a fault of the electric motor 40 due to a change in the ambient temperature. As shown in FIG. 3, the controller 60 may determine a parameter threshold corresponding to the ambient temperature according to the current ambient temperature from the temperature detection device 80 and then determine a current electric motor control policy based on a numerical relationship between a current operating parameter from the parameter detection device 70 and the parameter threshold and regulate the electric motor speed and the change trend thereof by using the electric motor control policy.

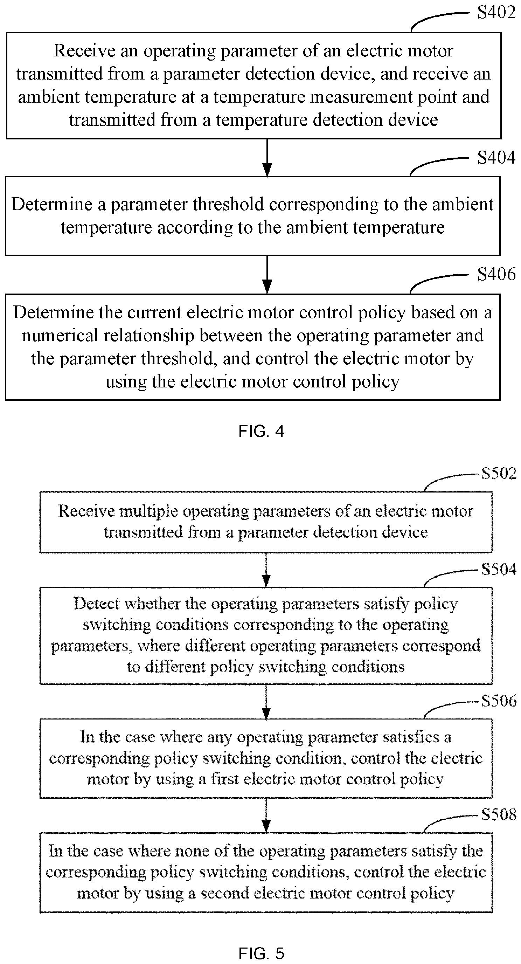

Correspondingly, referring to FIG. 4, FIG. 4 is a flowchart of a method for the controller 60 to control the electric motor 40 in the preceding examples. A method 400 for the controller 60 to control the electric motor 40 specifically includes S402, S404, and S406.

S402, the operating parameter of the electric motor 40 and/or the power supply device 50 transmitted from the parameter detection device 70 is received, and the ambient temperature at the temperature measurement point and transmitted from the temperature detection device 80 is received.

S404, the parameter threshold corresponding to the ambient temperature is determined according to the ambient temperature.

In S406, the current electric motor control policy is determined based on the numerical relationship between the operating parameter and the parameter threshold, and the electric motor 40 is controlled by using the electric motor control policy.

In the preceding examples, the parameter detection device 70 may detect and transmit one or more operating parameters, and types of the operating parameters and the number of operating parameters are not limited. For details, refer to the preceding related description. The temperature detection device 80 may detect and transmit ambient temperatures at one or more temperature measurement points, and positions of the temperature measurement points and the number of temperature measurement points are not limited. For details, refer to the preceding related description.

A data table for looking up the corresponding parameter threshold according to the ambient temperature or a preset rule for obtaining the parameter threshold according to the ambient temperature is provided in the controller 60. For example, a mapping table between ambient temperature intervals and parameter thresholds or a preset function for calculating the parameter threshold according to the ambient temperature may be provided in the controller 60. The controller 60 may look up or calculate the corresponding parameter threshold by using an ambient temperature at a single temperature measurement point, may analyze and convert ambient temperatures at multiple temperature measurement points and look up or calculate the corresponding parameter threshold by using a temperature obtained after analysis and conversion, or may calculate the corresponding parameter threshold by using ambient temperatures at multiple temperature measurement points. Parameter thresholds corresponding to different ambient temperatures may be different. For example, a parameter threshold corresponding to an ambient temperature lower than a low temperature threshold may be different from a parameter threshold corresponding to an ambient temperature higher than a high temperature threshold, and whether the parameter threshold is positively or negatively correlated to the ambient temperature is not limited.

The controller 60 selects a target policy from multiple electric motor control policies based on a numerical relationship between the operating parameter or an operation value of the operating parameter and the parameter threshold corresponding to the current ambient temperature. The operating parameter or the operation value of the operating parameter includes a single operating parameter, an operation value of a single operating parameter, and an operation value of multiple operating parameters. In some examples, the controller 60 uses whether the operating parameter or the operation value of the operating parameter exceeds the parameter threshold corresponding to the current ambient temperature as a policy switching condition. If the operating parameter or the operation value of the operating parameter exceeds a current parameter threshold, the electric motor 40 is controlled by using a first electric motor control policy. On the contrary, if the operating parameter or the operation value of the operating parameter does not exceed the current parameter threshold, the electric motor 40 is controlled by using a second electric motor control policy.

The second electric motor control policy is an electric motor control policy when the electric motor 40 is in the to-be-loaded state, and the controller 60 uses the second electric motor control policy to control the electric motor 40 to maintain the target low speed or the target low duty cycle. The first electric motor control policy is an electric motor control policy when the electric motor 40 is in the loaded state, and the controller 60 uses the first electric motor control policy to control the electric motor speed to increase and remain the target high speed. Multiple optional implementation manners exist for the controller 60 to control the electric motor speed to increase or be maintained. For example, the electric motor speed and a rotational speed change process may be regulated through PWM duty cycle adjustment or PI (proportional integral) adjustment, that is, the electric motor speed may be regulated to change linearly or non-linearly according to an intended process and remain at a target duty cycle or a target rotational speed. In some other examples, more numerical relationships may be set. For example, a difference between the operating parameter or the operation value of the operating parameter and the parameter threshold is greater than a first threshold, less than or equal to the first threshold and greater than a second threshold, or less than or equal to the second threshold so that the controller 60 can select the electric motor control policy from more electric motor control policies based on the numerical relationship between the operating parameter or the operation value of the operating parameter and the parameter threshold.

In an implementation manner of the preceding example, the temperature detection device 80 detects and transmits a first ambient temperature as the current ambient temperature at a first moment. After receiving the first ambient temperature, the controller 60 may determine a first parameter threshold corresponding to the first ambient temperature, compare the first parameter threshold with a current first electric motor speed detected and transmitted by the parameter detection device 70, when the first electric motor speed is greater than the first parameter threshold, determine that the electric motor 40 is still in the to-be-loaded state, and use the second electric motor control policy to control the electric motor speed to remain the target low speed or at the target low duty cycle. The temperature detection device 80 detects and transmits a second ambient temperature at a second moment. After receiving the second ambient temperature, the controller 60 determines a second parameter threshold corresponding to the second ambient temperature, compares the second parameter threshold with a current second electric motor speed detected and transmitted by the parameter detection device 70, when the second electric motor speed is less than or equal to the second parameter threshold, determines that the electric motor 40 enters the loaded state, and uses the first electric motor control policy to control the electric motor speed to increase and remain the target high speed.

Assuming that the second ambient temperature is higher than the first ambient temperature and the second parameter threshold is greater than the first parameter threshold, the first electric motor speed greater than the first parameter threshold may be less than the second parameter threshold. For the same electric motor speed, the controller 60 uses the first electric motor control policy at the second moment to control the electric motor 40, where the first electric motor control policy is different from that at the first moment, and the state of the electric motor 40 changes from the to-be-loaded state to the loaded state, which adapts to a phenomenon that the electric motor speed increases since inter-gear grease is less condensed when the ambient temperature rises. Correspondingly, the second electric motor speed less than the second parameter threshold may be greater than the first parameter threshold. For the same electric motor speed, the controller 60 uses the second electric motor control policy at the first moment to control the electric motor 40, where the second electric motor control policy is different from that at the second moment, and the state of the electric motor 40 changes from the loaded state to the to-be-loaded state, which adapts to a phenomenon that the electric motor speed decreases since the inter-gear grease is condensed when the ambient temperature decreases, thereby effectively improving the temperature adaptability and sensitivity of control of the electric motor 40 by the controller 60.

In some examples, the controller 60 further has a third electric motor control policy. The third electric motor control policy is an electric motor control policy when the electric motor 40 is in the no-load state. After the power tool 100 starts and before the electric motor 40 enters the to-be-loaded state, the controller 60 uses the third electric motor control policy to control the electric motor speed to increase and remain the target low speed or at the target low duty cycle.

In another implementation manner of the preceding example, after the power tool 100 starts, the controller 60 uses the third electric motor control policy to control the PWM duty cycle of the electric motor 40 to increase in the no-load state of the electric motor 40 until the PWM duty cycle reaches the target low duty cycle, and the electric motor 40 enters the to-be-loaded state. Since the electric motor 40 is to be loaded, an increase in the PWM duty cycle is an increase in the electric motor speed. After the PWM duty cycle is stabilized at the target low duty cycle, the controller 60 may determine an idle speed of the electric motor 40. Subsequently, the controller 60 may determine the corresponding parameter threshold according to the idle speed and the current ambient temperature and compare the current electric motor speed with the parameter threshold to switch a control policy of the electric motor 40. Specifically, assuming that the controller 60 determines the idle speed of the electric motor 40 to be Speed1 after the PWM duty cycle of the electric motor reaches and remains the target low duty cycle and the ambient temperature at a moment after the electric motor 40 enters the to-be-loaded state is T1, the parameter threshold compared by the controller 60 with the current electric motor speed may be F(Speed1) - f(T1), where F(Speed1) is a positively correlated function of Speed1 and f(T1) is a negatively correlated function of T1, that is, the higher the idle speed and the higher the ambient temperature, the higher the corresponding parameter threshold. In other words, in this implementation manner, the parameter threshold used for switching the electric motor control policy is not only related to the current ambient temperature but also related to a stable rotational speed when the electric motor 40 is in the no-load state. Actually, a different power supply voltage of the battery pack and a different target low duty cycle in the no-load state both affect the subsequent electric motor speed and the preceding implementation manner can effectively resolve the related problem.

In some examples, considering that when the electric motor 40 is in the no-load state and is to enter the to-be-loaded state, the operating parameter such as the electric motor speed is still changing, which may affect the determination of the switching condition, determination of the state of the electric motor, and selection of the control policy and cause false determination, some of the preceding technical solutions may be executed after the controller 60 determines that the electric motor 40 enters the to-be-loaded state and are not executed when the electric motor 40 is still in the no-load state.

In some examples, the power tool 100 has multiple working modes, the working modes include at least two speed regulation modes and one automatic sensing mode, and the operating member is operable by the user to select a current target mode of the power tool 100 from the multiple working modes. In the case where the current mode is a speed regulation mode, the controller 60 controls the electric motor 40 to run at a rotational speed corresponding to the speed regulation mode. In the case where the current mode is the automatic sensing mode, the controller 60 performs the preceding technical solutions of condition determination and policy switching related to electric motor control.

In some examples, the controller 60 switches the control policy of the electric motor 40 according to multiple operating parameters and policy switching conditions corresponding to the multiple operating parameters rather than a single parameter and a single condition, to improve the sensitivity and accuracy of control of the electric motor 40 by the controller 60 in the power tool 100. As shown in FIG. 3, the controller 60 may detect whether the current operating parameters from the parameter detection device 70 satisfy the policy switching conditions corresponding to the operating parameters, control the electric motor 40 by using the first electric motor control policy when any operating parameter satisfies the corresponding policy switching condition, and control the electric motor 40 by using the second electric motor control policy when none of the operating parameters satisfy the corresponding policy switching conditions. It is to be understood that in the preceding example, the temperature detection device 80 may not be disposed in the power tool 100.

Correspondingly, referring to FIG. 5, FIG. 5 is a flowchart of a method for the controller 60 to control the electric motor 40 in the preceding example. A method 500 for the controller 60 to control the electric motor 40 specifically includes S502, S504, S506, and S508.

In S502, the multiple operating parameters of the electric motor 40 and/or the power supply device 50 transmitted from the parameter detection device 70 are received.

In S504, it is detected whether the operating parameters satisfy the policy switching conditions corresponding to the operating parameters, where different operating parameters correspond to different policy switching conditions.

In S506, in the case where any operating parameter satisfies the corresponding policy switching condition, the electric motor 40 is controlled by using the first electric motor control policy.

In S508, in the case where none of the operating parameters satisfy the corresponding policy switching conditions, the electric motor 40 is controlled by using the second electric motor control policy.

In the preceding example, the parameter detection device 70 detects and transmits at least two operating parameters, and the types of the operating parameters and the number of operating parameters are not limited. For details, refer to the preceding description. The policy switching conditions corresponding to the operating parameters are provided in the controller 60. Specifically, the policy switching condition corresponding to the operating parameter may be a particular numerical relationship between an operation value obtained from the operating parameter according to a corresponding preset rule and a parameter threshold corresponding to the operating parameter. In some examples, that the operating parameter satisfies the corresponding policy switching condition may be that the operating parameter or the operation value of the operating parameter exceeds the corresponding parameter threshold. The operating parameters may or may not have a one-to-one correspondence with the policy switching conditions. One policy switching condition may be determined by using an operation of a single operating parameter or may be determined by using an operation of multiple operating parameters. However, the controller 60 determines whether at least two policy switching conditions are satisfied when determining the state of the electric motor and switching the control policy.

In an implementation manner of the preceding example, the parameter detection device 70 detects and transmits three operating parameters, the electric motor speed, the bus voltage, and the freewheeling time. When receiving the electric motor speed as one operating parameter, the controller 60 may detect whether the current electric motor speed is less than or equal to an electric motor speed threshold, and when receiving the bus voltage and the freewheeling time as two operating parameters, the controller 60 may detect whether a current product of the bus voltage and the freewheeling time is greater than a voltage freewheeling threshold. When the current electric motor speed is less than or equal to the electric motor speed threshold or the current product of the bus voltage and the freewheeling time is greater than the voltage freewheeling threshold, the controller 60 may use the first electric motor control policy, determine that the electric motor 40 is currently in the loaded state, and control the electric motor speed to increase and remain the target high speed. When the current electric motor speed is greater than the electric motor speed threshold and the current product of the bus voltage and the freewheeling time is less than or equal to the voltage freewheeling threshold, the controller 60 may use the second electric motor control policy, determine that the electric motor 40 is still in the to-be-loaded state, and control the electric motor speed to remain the target low speed or at the target low duty cycle.

In another implementation manner of the preceding example, the parameter detection device 70 detects and transmits two operating parameters, the electric motor speed and the bus current. When receiving the electric motor speed, the controller 60 may detect whether a difference between a reciprocal of the electric motor speed in a current period and a reciprocal of the electric motor speed in a previous period is greater than a rotational speed difference threshold. When receiving the bus current, the controller 60 may detect whether the current bus current is greater than a load current threshold. If any one of the two conditions is satisfied, the first electric motor control policy is used; otherwise the second electric motor control policy is used. It is to be understood that the parameter detection device 70 may detect and transmit more operating parameters, and the controller 60 may determine more corresponding policy switching conditions.

In some examples, the controller 60 further has the third electric motor control policy used when the electric motor 40 is in the no-load state. After the power tool 100 starts and before the electric motor 40 enters the to-be-loaded state, the controller 60 may use the third electric motor control policy to control the electric motor speed to increase in the no-load state of the electric motor until the electric motor speed reaches the target low speed when the electric motor speed remains unchanged and the electric motor 40 enters the to-be-loaded state. In this example, the controller 60 may regulate the electric motor speed through the PI adjustment in the no-load state and the to-be-loaded state of the electric motor, where the PI adjustment is closed-loop negative feedback adjustment. After the controller 60 configures the electric motor speed to be unchanged through the PI adjustment, the electric motor 40 can maintain the target rotational speed in a dynamic balance even if the electric motor 40 is loaded.

In an implementation manner of the preceding example, to further improve the sensitivity and accuracy of control of the electric motor 40 by the controller 60, the controller 60 may determine, by using an integral value of a slope of a function of the operating parameter over time within a preset period, how to select the control policy of the electric motor 40. In an example, considering that in the case of PI adjustment, the bus current of the electric motor 40 increases non-linearly to maintain the target rotational speed after the electric motor 40 is loaded, the controller 60 may detect whether an integral value of a slope of a function of the bus current of the electric motor 40 over time within a corresponding preset period is greater than or equal to a current integral threshold. The slope of the function of the bus current over time represents a change trend of the bus current of the electric motor 40 at every moment. If the bus current tends to increase at a moment, the slope of the function of the bus current over time at the moment is a positive value. If the bus current tends to decrease at a moment, the slope of the function of the bus current over time at the moment is a negative value. The integral value of the slope of the function of the bus current over time within a period may represent an overall change trend of the bus current within the period. If the integral value is greater than or equal to the current integral threshold, the first electric motor control policy is used, it is determined that the electric motor 40 enters the loaded state, and the electric motor speed is controlled to increase and remain the target high speed. On the contrary, the second electric motor control policy is used, it is determined that the electric motor 40 is still in the to-be-loaded state, and the electric motor speed is controlled to remain the target low speed.

In another example, considering that in the case of PI adjustment, the PWM duty cycle of the electric motor 40 increases non-linearly to maintain the target rotational speed after the electric motor 40 is loaded, the controller 60 may detect whether an integral value of a slope of a function of the PWM duty cycle of the electric motor 40 over time within a corresponding preset period is greater than or equal to a duty cycle integral threshold. Like the preceding principle, the slope of the function of the PWM duty cycle over time represents a change trend of the PWM duty cycle of the electric motor 40 at every moment. The integral value of the slope of the function of the PWM duty cycle over time within a period may represent an overall change trend of the PWM duty cycle within the period. If the integral value is greater than the duty cycle integral threshold, the first electric motor control policy is used; otherwise the second electric motor control policy is used.

Additionally, considering that when the electric motor 40 is in the no-load state and is to enter the to-be-loaded state, the operating parameters of the electric motor such as the bus current and the PWM duty cycle are still changing, which may affect the determination of the switching condition, determination of the state of the electric motor, and selection of the control policy and cause false determination, the controller 60 may perform, in the preceding implementation manner, the comparison of the integral value with the threshold and the switching of the electric motor control policy after the electric motor speed exceeds a sensing speed threshold corresponding to the target low speed and does not perform the related solution before the electric motor speed reaches the sensing speed threshold. For example, the controller 60 may start to perform the preceding detection and switching after the electric motor speed exceeds 95% of the target low speed.

In some other examples, after the power tool 100 starts and before the electric motor 40 enters the to-be-loaded state, the controller 60 may use the third electric motor control policy to control the PWM duty cycle of the electric motor to increase in the no-load state of the electric motor until the PWM duty cycle of the electric motor reaches the target low duty cycle when the PWM duty cycle of the electric motor is the target low duty cycle and the electric motor 40 enters the to-be-loaded state. In this example, in the no-load state and the to-be-loaded state of the electric motor, the controller 60 may regulate the electric motor speed through the PWM duty cycle adjustment, where the PWM duty cycle adjustment is affected by factors such as the power supply voltage and a load condition of the electric motor. After the controller 60 configures the PWM duty cycle of the electric motor to be unchanged through the PWM duty cycle adjustment, if the electric motor is loaded, the electric motor 40 cannot maintain the target duty cycle or the target rotational speed, the PWM duty cycle of the electric motor 40 decreases, and the electric motor speed decreases.

In an implementation manner of the preceding example, to further improve the sensitivity and accuracy of control of the electric motor 40 by the controller 60, the controller 60 may determine, by using the integral value of the slope of the function of the operating parameter over time within the preset period, how to select the electric motor control policy. Considering that in the case of PWM duty cycle adjustment, the electric motor speed decreases non-linearly after the electric motor 40 is loaded, the controller 60 may detect whether an integral value of a slope of a function of the electric motor speed of the electric motor 40 over time within a corresponding preset period is less than or equal to a rotational speed integral threshold. Like the preceding principle, the slope of the function of the electric motor speed over time represents a change trend of the electric motor speed of the electric motor 40 at every moment. The integral value of the slope of the function of the electric motor speed over time within a period may represent an overall change trend of the electric motor speed within the period. If the integral value is less than or equal to the rotational speed integral threshold, the first electric motor control policy is used; otherwise the second electric motor control policy is used.

In some examples, the controller 60 periodically detects whether each operating parameter satisfies the corresponding policy switching condition, and the controller 60 may detect, at a different period, whether each operating parameter satisfies the corresponding policy switching condition. In some cases, a period at which the controller 60 detects whether each operating parameter satisfies the corresponding policy switching condition may be determined according to a period at which the parameter detection device 70 transmits the operating parameter or may be determined according to a characteristic of the operating parameter in some other cases. Based on the preceding example, in an implementation manner, the controller 60 may periodically detect, at a first preset period, whether the current electric motor speed is less than or equal to the electric motor speed threshold and periodically detect, at a second preset period, whether the current product of the bus voltage and the freewheeling time is greater than the voltage freewheeling threshold, where the first preset period may be 5 ms and the second preset period may be 1 ms.

In some examples, in addition to the multiple operating parameters, the comprehensiveness and accuracy of the determination of the state of the electric motor and the switching of the electric motor control policy may be further improved in conjunction with the effect of the ambient temperature considered above, to solve the problems of the control failure and fault in a special temperature environment. As shown in FIG. 2, the controller 60 determines, according to the current ambient temperature detected and transmitted by the temperature detection device 80, the policy switching condition corresponding to each operating parameter at the current ambient temperature, where the controller 60 may periodically adjust, according to the ambient temperature, the policy switching condition corresponding to each operating parameter, and the period may be 1-10 ms.

In some cases, different parameter thresholds may be used for comparison with the operating parameter or the operation value thereof at different ambient temperatures. In some other cases, the operating parameter used for comparison with the parameter threshold may have different calculation rules at different ambient temperatures. In other words, besides that different operating parameters may correspond to different policy switching conditions, the same operating parameter may correspond to different policy switching conditions at different ambient temperatures. In some examples, to ensure solution efficiency, the ambient temperature may only be high or low, that is, the operating parameter has a policy switching condition at a high ambient temperature and a policy switching condition at a low ambient temperature.

The controller 60 detects whether each operating parameter detected and transmitted by the parameter detection device 70 satisfies the policy switching condition corresponding to the operating parameter at the current ambient temperature, when any operating parameter satisfies the corresponding policy switching condition, uses the first electric motor control policy to control the electric motor speed to increase and remain the target high speed, and when none of the operating parameters satisfy the corresponding policy switching conditions, uses the second electric motor control policy to control the electric motor speed to remain the target low speed or at the target low duty cycle.

In some examples, the controller 60 determines, according to specific values of one or more operating parameters within a preset time period of a process of performing a current working task, the parameter threshold used for the subsequent switching of the electric motor control policy in the current working task, where the parameter threshold used in each working task is re-determined in the current working task so that the parameter threshold adapts to a current actual working environment and tool state. The controller 60 may determine, according to a value of the operating parameter within the preset time period and from the parameter detection device 70, the parameter threshold to be used subsequently. Then, the controller 60 may determine, out of the preset time period, the current electric motor control policy based on the numerical relationship between the current operating parameter acquired by the parameter detection device 70 and the determined parameter threshold and regulate the electric motor speed and the change trend thereof by using the electric motor control policy.

Correspondingly, the method for the controller 60 to control the electric motor 40 in the preceding example specifically includes: receiving an operating parameter of the electric motor 40 and/or the power supply device 50 transmitted by the parameter detection device 70 within the preset time period, and determining the corresponding parameter threshold according to the value of the operating parameter within the preset time period; receiving the current operating parameter of the electric motor 40 and/or the power supply device 50 transmitted by the parameter detection device 70, determining the current electric motor control policy based on the numerical relationship between the current operating parameter and the determined parameter threshold, and controlling the electric motor 40 by using the electric motor control policy.

In the preceding examples, the parameter detection device 70 may detect and transmit one or more operating parameters, and the types of the operating parameters and the number of operating parameters are not limited. The operating parameter includes, but is not limited to, one or more of the electric motor speed, the bus current, the bus voltage, the phase voltage, the PWM duty cycle, the demagnetization time, and the freewheeling time of the electric motor and an operation value of one or more of these operating parameters. The controller 60 may acquire values of one or more operating parameters within the preset time period. Specifically, different values of the operating parameters at multiple moments acquired by the parameter detection device 70 multiple times within the preset time period may be acquired, and then the corresponding parameter thresholds may be determined according to the values of the one or more operating parameters within the preset time period. The parameter thresholds are subsequently compared with the one or more operating parameters to determine the electric motor control policy. In some examples, the operating parameters may have a one-to-one correspondence with the parameter thresholds, that is, one operating parameter corresponds to one parameter threshold. In some other examples, the operating parameters may not have a one-to-one correspondence with the parameter thresholds, that is, multiple operating parameters correspond to one parameter threshold. Specifically, an operation value of the multiple operating parameters may be compared with the corresponding parameter threshold to determine the electric motor control policy.

In some examples, the parameter threshold may be determined according to a value of the operating parameter within a preset duration since the electric motor 40 is started. The preceding preset time period is a time period of the preset duration since the electric motor 40 is started. For example, the preset time period may be 5s after the electric motor 40 is started. In some examples, when the corresponding parameter thresholds are determined according to the values of the one or more operating parameters within the preset time period, the values of the operating parameters or the operation value thereof at a moment within the preset time period may be directly used as the parameter threshold for subsequent use. For example, a product of the bus voltage and the freewheeling time at any moment within 5s after the electric motor 40 is started is used as the parameter threshold for subsequent use. Alternatively, an operation value of the operating parameters at multiple moments within the preset time period may be used as the parameter threshold for subsequent use. For example, an average value of the product of the bus voltage and the freewheeling time within 5s after the electric motor 40 is started is used as the parameter threshold for subsequent use.

In the case where the current operating parameter or the operation value of the operating parameter exceeds the corresponding parameter threshold determined above, the controller 60 may control the electric motor 40 by using the first electric motor control policy. On the contrary, in the case where the current operating parameter or the operation value of the operating parameter does not exceed the corresponding parameter threshold determined above, the controller 60 may control the electric motor 40 by using the second electric motor control policy. In some examples, the preceding parameter threshold may be updated after the electric motor is started each time, that is, the preceding parameter threshold is updated in each working task. With actual changes of the current working environment, working condition, and tool state, the parameter threshold can dynamically and adaptively change. Additionally, the parameter threshold is updated only once in each working task.

In an implementation manner of the preceding example, the parameter detection device 70 detects the bus voltage and the freewheeling time of the electric motor 40 and transmits the bus voltage and the freewheeling time to the controller 60 within the preset duration since the electric motor 40 is started, and the controller 60 configures the average value of the product of the bus voltage and the freewheeling time of the electric motor 40 within the preset duration since the electric motor 40 is started to be the corresponding parameter threshold for subsequent use in the current working task. After the preset duration since the electric motor 40 is started, the parameter detection device 70 continues detecting and transmitting the current bus voltage and freewheeling time of the electric motor 40 to the controller 60. The controller 60 compares the current product of the bus voltage and the freewheeling time of the electric motor 40 with the determined parameter threshold. When the current product exceeds the determined threshold, it is determined that the electric motor 40 enters the loaded state, and the controller 60 may use the first electric motor control policy to control the rotational speed of the electric motor 40 to increase and remain the target high speed. When the current product does not exceed the determined threshold, it is determined that the electric motor 40 is still in the to-be-loaded state, and the controller 60 may use the second electric motor control policy to control the rotational speed of the electric motor 40 to remain the target low speed or at the target low duty cycle.

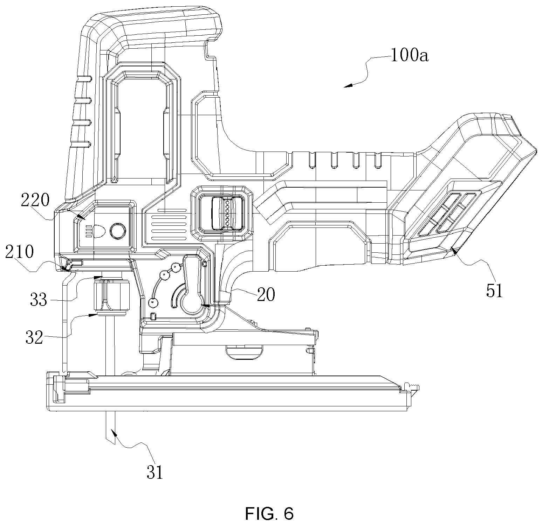

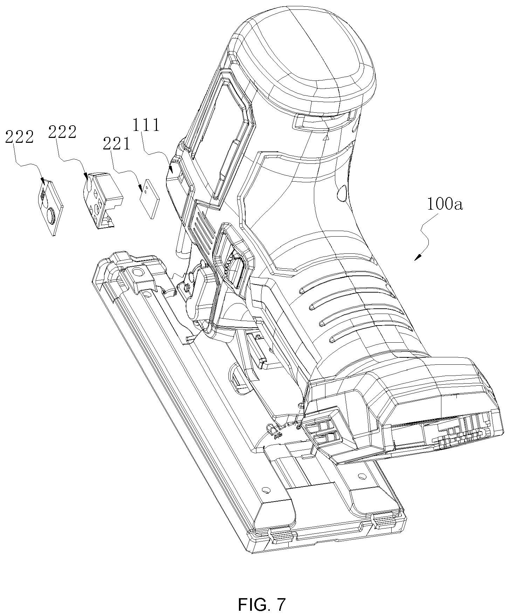

For the jigsaw 100a, a jigsaw 100a to which a lighting assembly 200 is applied and a control scheme of the jigsaw 100a are described below. As shown in FIGS. 6 and 7, the jigsaw 100a further includes the lighting assembly 200, and the lighting assembly 200 includes a lighting element 210 installed near the clamping device 32 and a lighting operation member 220 installed in a mounting slot 111 of the housing 10. The lighting element 210 is configured to implement a lighting function and may include a lamp and a lamp cover which, for example, may be a single bead and a transparent lamp cover or may be an annular shadowless lamp and a lamp cover. The lighting operation member 220 is installed on the housing 10 in a manner of being convenient to install and detach and easy to repair. For example, the lighting operation member 220 may include a switching printed circuit board (PCB) 221 and a switch panel 222, where the switching PCB 221 is accommodated in the mounting slot 111 of the housing 10, and the switch panel 222 mates with a screw to fix the switching PCB 221 and the switch panel to the housing 10 and is provided with a button 223 for the user to operate to turn on or off the lighting element 210. The switching PCB 221 may be electrically connected to the lighting element 210 and the switch panel 222. When the button 223 on the switch panel 222 is operated by the user to turn on or off the lighting element 210, the switching PCB may correspondingly implement or assist in implementing the lighting or extinguishing of the lighting element 210.

In some examples, the controller 60 is electrically connected to the lighting element 210 and the lighting operation member 220. At the beginning of startup of the jigsaw 100a and before the jigsaw 100a starts a current operation, the controller 60 may read a lighting state of the lighting element 210 stored in a previous operation process of the jigsaw 100a and control, according to the lighting state, the lighting element 210 to turn on or off. Generally, if the jigsaw 100a performs down cutting in the previous operation, the lighting element 210 of the jigsaw 100a is turned on, and in the current operation, the controller 60 may light, after power-on, the lighting element 210 according to the stored lighting state before the operation starts. If the jigsaw 100a performs up cutting in the previous operation, the lighting element 210 of the jigsaw 100a is turned off, and in the current operation, the controller 60 may keep, after power-on, the lighting element 210 off according to the stored lighting state before the operation starts. However, after the operating member 20 of the jigsaw 100a is operated and the saw blade 31 starts the cutting operation, the controller 60 may detect whether the lighting operation member 220 is operated by the user to light the currently off lighting element 210 or extinguish the currently on lighting element 210. For example, the controller 60 may detect whether the button 223 on the switch panel 222 is operated and transmits a corresponding signal. If yes, the controller 60 correspondingly lights or extinguishes the lighting element 210 and updates the stored lighting state of the lighting element 210. In some other examples, when detecting a fault of the electric motor 40, the controller 60 may control the lighting element 210 to flicker in a preset manner to prompt the fault.

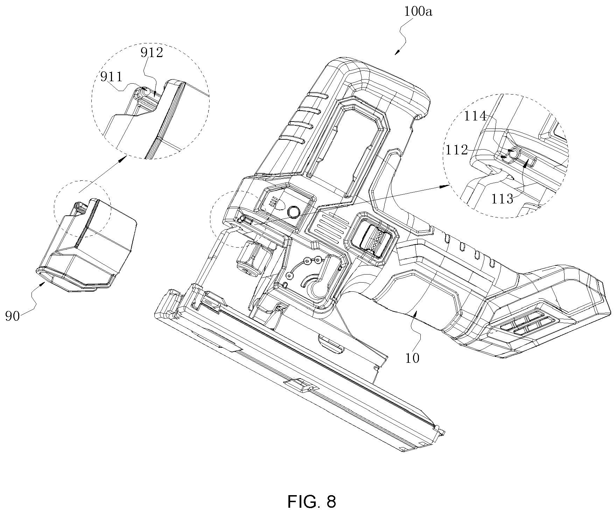

For the jigsaw 100a, a jigsaw 100a to which a shield 90 is applied is described below. As shown in FIGS. 1, 2, and 8, the jigsaw 100a further includes the shield 90 made of a transparent material. The shield 90 can not only enhance a dust suction effect and prevent splashing of wood chips but also make the user more conveniently observe a machining condition. The shield 90 is rotatably connected to the housing 10 of the jigsaw 100a. The housing 10 is provided with a first limiting groove 112, a second limiting groove 113, and a rotatable connection groove 114. Specifically, one first limiting groove 112, one second limiting groove 113, and one rotatable connection groove 114 may be disposed on each of two side surfaces of an end of the housing 10 facing the saw blade 31 and located above the saw blade 31 and the clamping device 32. The first limiting groove 112 and the second limiting groove 113 may each be a quasi-rectangular groove, the first limiting groove 112 may be disposed along a direction perpendicular to a straight line where the saw blade 31 is located, the second limiting groove 113 may be disposed along a direction that is, relative to the first limiting groove 112, at an angle of at least 90° by which the shield 90 is turned outward, and the rotatable connection groove 114 may be disposed at a joint between the first limiting groove 112 and the second limiting groove 113. Correspondingly, one rotation protrusion 911 and one limiting rib 912 are formed on each of two sides of an inner surface of the shield 90 above the saw blade 31 and the clamping device 32. The rotation protrusion 911 corresponds to the rotatable connection groove 114 in shape, and the limiting rib 912 corresponds to the first limiting groove 112 and the second limiting groove 113 in shape.

The first limiting groove 112, the second limiting groove 113, and the rotatable connection groove 114 on the housing 10 mate with the rotation protrusion 911 and the limiting rib 912 on the shield 90 to implement the rotatable connection between the shield 90 and the housing 10. As shown in FIG. 1, during the cutting operation of the saw blade 31 of the jigsaw 100a, rotation protrusions 911 on two sides of the shield 90 are correspondingly embedded into and limited by rotatable connection grooves 114 on two sides of the housing 10, limiting ribs 912 on the two sides of the shield 90 are correspondingly embedded into and limited by first limiting grooves 112 on the two sides of the housing 10, the shield 90 forms a relatively closed protective space around the saw blade 31, thereby implementing a protection function of enhancing dust suction and preventing splashing, and the shield 90 can remain basically fixed without being turned in the case of workpiece vibration. As shown in FIG. 2, when the saw blade 31 is replaced or the working condition is checked, the rotation protrusions 911 on the two sides of the shield 90 are correspondingly embedded into and limited by the rotatable connection grooves 114 on the two sides of the housing 10, the limiting ribs 912 on the two sides of the shield 90 are correspondingly embedded into and limited by second limiting grooves 113 on the two sides of the housing 10 after rotation, and the saw blade 31 is open around and is no longer shielded by the shield 90. Therefore, the user can conveniently replace the saw blade 31 or view a cutting path of the saw blade 31.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool (100), comprising:
a functional piece (30);
an electric motor (40) for driving the functional piece to operate;
a power supply device (50) for supplying power to at least the electric motor;
a parameter detection device (70) connected to the electric motor and configured to acquire a plurality of operating parameters of the electric motor and/or the power supply device; and
a controller (60) connected to the parameter detection device and configured to control running of the electric motor;
wherein the controller is configured to:
detect whether the plurality of operating parameters satisfy policy switching conditions corresponding to the plurality of operating parameters;
in a case where any operating parameter of the plurality of operating parameters satisfies a policy switching condition corresponding to the any operating parameter,
control the electric motor by using a first electric motor control policy; and
in a case where none of the plurality of operating parameters satisfy the policy switching conditions corresponding to the plurality of operating parameters, control the electric motor by using a second electric motor control policy.

2. The power tool of claim 1, wherein the plurality of operating parameters comprise at least two of an electric motor speed, a bus current, a bus voltage, a phase voltage, a pulse-width modulation (PWM) duty cycle, a demagnetization time, and a freewheeling time of the electric motor.

3. The power tool of claim 1, further comprising: a temperature detection device (80) connected to the controller and configured to acquire an ambient temperature at a temperature measurement point and transmit the ambient temperature to the controller, wherein the controller is configured to:
determine policy switching conditions corresponding to the plurality of operating parameters at the ambient temperature according to the ambient temperature; and
detect whether the plurality of operating parameters satisfy the policy switching conditions corresponding to the plurality of operating parameters at the ambient temperature, where the same operating parameter corresponds to different policy switching conditions at different ambient temperatures.

4. The power tool of claim 3, wherein the ambient temperature is any one of an electric motor temperature, a housing temperature, and a metal-oxide-semiconductor (MOS) temperature of the power tool.

5. The power tool of claim 3, wherein the controller is configured to:
if an electric motor speed of the electric motor is less than or equal to a first parameter threshold corresponding to a first ambient temperature, control the electric motor by using the first electric motor control policy; and
if the electric motor speed is greater than the first parameter threshold, control the electric motor by using the second electric motor control policy.

6. The power tool of claim 5, wherein a second parameter threshold corresponding to a second ambient temperature is greater than the first parameter threshold corresponding to the first ambient temperature, and the second ambient temperature is higher than the first ambient temperature.

7. The power tool of claim 1, wherein the controller is configured to periodically detect whether each operating parameter of the plurality of operating parameters satisfies a policy switching condition corresponding to the each operating parameter based on a detection period corresponding to the each operating parameter.

8. The power tool of claim 1, wherein the controller is configured to:
in a case where the any operating parameter of the plurality of operating parameters satisfies the policy switching condition corresponding to the any operating parameter, control an electric motor speed of the electric motor to increase and remain a target high speed in a loaded state; and
in a case where none of the plurality of operating parameters satisfy the policy switching conditions corresponding to the plurality of operating parameters, control the electric motor speed of the electric motor to remain a target low speed in a to-be-loaded state or configure the PWM duty cycle of the electric motor to be a target low duty cycle in the to-be-loaded state.

9. The power tool of claim 8, wherein the controller is configured to use the operating parameter or an operation value of the operating parameter exceeding a parameter threshold corresponding to the operating parameter as the policy switching condition or use the operating parameter or an operation value of the operating parameter exceeding a parameter threshold corresponding to the operating parameter at a current ambient temperature as the policy switching condition.

10. The power tool of claim 8, wherein the controller is further configured to:
before the electric motor enters the to-be-loaded state, control the electric motor speed of the electric motor to increase in a no-load state, and set the electric motor speed to remain unchanged so that the electric motor enters the to-be-loaded state; and
if an integral value of a slope of a function of the bus current of the electric motor over time within a preset period is greater than or equal to a corresponding current integral threshold, control the electric motor speed of the electric motor to increase and remain the target high speed in the loaded state .

11. The power tool of claim 8, wherein the controller is further configured to:
before the electric motor enters the to-be-loaded state, control the electric motor speed of the electric motor to increase in a no-load state, and set the electric motor speed to remain unchanged when the electric motor speed reaches the target low speed so that the electric motor enters the to-be-loaded state; and
if an integral value of a slope of a function of the PWM duty cycle of the electric motor over time within a preset period is greater than or equal to a corresponding duty cycle integral threshold, control the electric motor speed of the electric motor to increase and remain the target high speed in the loaded state .

12. The power tool of claim 8, wherein the controller is further configured to:
before the electric motor enters the to-be-loaded state, control the PWM duty cycle of the electric motor to increase in a no-load state, and set the electric motor speed to remain unchanged when the electric motor speed reaches the target low speed so that the electric motor enters the to-be-loaded state; and
if an integral value of a slope of a function of the electric motor speed of the electric motor over time within a preset period is less than or equal to a corresponding rotational speed integral threshold, control the electric motor speed of the electric motor to increase and remain the target high speed in the loaded state.

13. The power tool of claim 1, wherein the controller is configured to:
determine a corresponding parameter threshold according to a value of the operating parameter within a preset time period, and
determine, out of the preset time period, a current electric motor control policy based on a numerical relationship between a current operating parameter and the determined parameter threshold, and control the electric motor by using the electric motor control policy

14. The power tool of claim 13, wherein the parameter threshold is updated after the electric motor is powered on each time.

15. The power tool of claim 13, wherein the controller is configured to:
determine the corresponding parameter threshold to be an average value of a product of a bus voltage and a freewheeling time of the electric motor within the preset duration since the electric motor is powered on;
after the preset duration since the electric motor is powered on, control the electric motor by using a first electric motor control policy in a case where a current product of the bus voltage and the freewheeling time of the electric motor exceeds the parameter threshold, and control the electric motor by using a second electric motor control policy in a case where the current product of the bus voltage and the freewheeling time of the electric motor does not exceed the parameter threshold.
